# EUROPÄISCHE PATENTSCHRIFT

(11) **EP 3 721 183 B1**
(45) Veröffentlichungstag und Bekanntmachung des Hinweises auf die Patenterteilung: **12.01.2022**
(21) Anmeldenummer: 19748690.5
(22) Anmeldetag: 04.07.2019
(51) Int. Cl.: G01F 15/18, G01F 23/284

(54) **BATTERIEBETRIEBENE MESSVORRICHTUNG**
BATTERY-OPERATED MEASUREMENT DEVICE
DISPOSITIF DE MESURE FONCTIONNANT SUR BATTERIE

(30) Priorität: 02.08.2018 DE 102018212965
(43) Veröffentlichungstag der Anmeldung: 14.10.2020
(73) Patentinhaber: VEGA Grieshaber KG, 77709 Wolfach (DE)
(72) Erfinder: DIETERLE, Levin, 77709 Oberwolfach (DE); WELLE, Roland, 77756 Hausach (DE)
(74) Vertreter: Maiwald Patent- und Rechtsanwaltsgesellschaft mbH
(86) Internationale Anmeldenummer: PCT/EP2019/067970
(87) Internationale Veröffentlichungsnummer: WO 2020/025251

(56) Entgegenhaltungen:
- WO-A1-2018/057911
- CN-A- 107 642 279
- US-A1- 2006 183 985
- US-A1- 2011 188 237
- US-A1- 2015 373 487
- US-B2- 8 970 395

## Beschreibung

### Gebiet der Erfindung

Die Erfindung betrifft eine batteriebetriebene Messvorrichtung mit einer Klebeschicht zur Anbringung der Messvorrichtung an einen gewünschten Messort Die Messvorrichtung kann insbesondere zur Füllstandmessung, im Speziellen zur radarbasierten Füllstandmessung, ausgeführt sein. Darüber hinaus betrifft die Erfindung ein Verfahren zur Inbetriebnahme einer Messvorrichtung.

### Technologischer Hintergrund

Bei batteriebetriebenen elektronischen Konsumerprodukten und/oder Messvorrichtungen werden regelmäßig Plastikfolien als Isolator zwischen Batterie und Spannungsabgriff der Elektronik verwendet, um eine Entladung der Batterie vor der Inbetriebnahme der Messvorrichtung zu verhindern. Im Auslieferungszustand ist die Elektronik der Messvorrichtung somit durch die Plastikfolie von der Energieversorgung getrennt. Zur Inbetriebnahme der Messvorrichtung wird die Plastikfolie vom Bediener entfernt, wodurch der Kontakt zwischen Batterie und Spannungsabgriff geschlossen wird. Zum Entfernen der Plastikfolie weist das Gehäuse der Messvorrichtung an zumindest einer Stelle eine Öffnung auf. Messvorrichtungen, etwa industrielle Messvorrichtungen, werden vielfach in Umgebungen betrieben, in denen explosive oder korrodierende Gase oder Flüssigkeiten auftreten können, die nicht in Kontakt mit der Elektronik und Sensorik der Messvorrichtung treten sollten. Ferner können Staubpartikel auftreten, insbesondere elektrisch leitende Staubpartikel, die die Elektronik und Sensorik negativ beeinflussen können. Dies kann unter anderem für Tankanlagen oder chemischen Fabriken, wie zum Beispiel Raffinerien oder lackherstellende Fabriken, relevant sein.

Beispielsweise können in Tankanlagen und chemischen Fabriken Messvorrichtungen zum Erfassen des Füllstandes eines Füllgutes in einem Behälter verwendet werden. Bei dem Füllgut kann es sich insbesondere um eine Flüssigkeit oder ein Schüttgut handeln. Der Füllstand kann mittels radarbasierter Verfahren, wie es zum Beispiel in US 8 970 395 B2 offenbart ist, gemessen werden, wobei Radarsignale auf die Füllgutoberfläche abgestrahlt werden. Die Laufzeit des Radarsignals von der Füllstandmessvorrichtung zur Füllgutoberfläche und zurück ist proportional zur Länge des zurückgelegten Wegs, sodass sich aus der gemessenen Laufzeit unter Kenntnis der Position der Füllstandmessvorrichtung und der Behältergeometrie der Füllstand bestimmen lässt. Häufig ist es erforderlich, dass weitere Messgrößen erfasst werden, beispielsweise die Temperatur.

Zum sicheren und zuverlässigen Betrieb von Messvorrichtungen, wie zum Beispiel Füllstandmessvorrichtungen, kann es erforderlich sein, dass die Elektronik und Sensorik nicht in Kontakt mit Flüssigkeiten und Gasen in der Umgebung der Messvorrichtung tritt. Dies kann erfordern, dass die Öffnung in dem Gehäuse der Messvorrichtung zum Anschluss und/oder Inbetriebnahme einer Energieversorgung abgedichtet wird. Bisher führt dies zu aufwendigen Herstellungsverfahren, die mit entsprechend hohen Herstellungskosten verbunden sind.

### Zusammenfassung der Erfindung

Mit Ausführungsformen der Erfindung kann in vorteilhafter Weise eine einfach herstellbare batteriebetriebene Messvorrichtung bereitgestellt werden Dies wird durch die Gegenstände der unabhängigen Patentansprüche ermöglicht. Weiterbildungen der Erfindung ergeben sich aus den Unteransprüchen und der folgenden Beschreibung.

Die vorliegende Erfindung betrifft eine Messvorrichtung zur Messung eines Füllstands und/oder Grenzstandes in einem Behälter mittels Radar, die ein Gehäuse mit einer darin angeordneten Elektronik- und Sensoreinheit zur Erfassung einer Messgröße, eine Batterie zur Energieversorgung der Elektronik- und Sensoreinheit, einen Magnetschalter, einen Magnet zur Betätigung des Magnetschalters, eine Klebeschicht und eine Schutzfolie zur Abdeckung der Klebeschicht aufweist. Die Klebeschicht ist außen am Gehäuse angeordnet und zur Anbringung der Messvorrichtung an einem gewünschten Messort ausgeführt, wobei die Schutzfolie derart mit dem Magneten verbunden ist, dass ein Abziehen der Schutzfolie von der Klebeschicht ein Entfernen des Magneten von dem Gehäuse zur Folge hat. Weiter ist die Messvorrichtung dazu ausgeführt, dass das Entfernen des Magneten von dem Gehäuse den Magnetschalter von einem ersten Schalterzustand in einen zweiten Schalterzustand schaltet, wobei in dem ersten Schalterzustand zumindest ein Teil der Elektronik- und Sensoreinheit nicht von der Batterie mit Energie versorgt wird, und wobei der Teil der Elektronik- und Sensoreinheit in dem zweiten Schalterzustand von der Batterie mit Energie versorgt wird.

Durch Vorsehen der Schutzfolie mit dem damit verbundenen Magneten kann in vorteilhafter Weise sichergestellt sein, dass sich die Batterie während einer Lagerung der Messvorrichtung nicht entlädt. Des Weiteren kann durch die Aktivierung der Energieversorgung mittels Abziehen der Schutzfolie zum einen die Energieversorgung auf einfache und für einen Benutzer intuitive Weise aktiviert werden und zum anderen gleichzeitig die Klebeschicht freigelegt werden, welche zur Anbringung der Messvorrichtung an dem Messort, etwa an einem Behälter, vorgesehen und/oder ausgeführt ist. Auf diese Weise kann sichergestellt werden, dass die Messvorrichtung vor Inbetriebnahme und/oder Anbringung an dem Messort, d.h. vor dem Abziehen der Schutzfolie, keine Energie verbraucht, und dass bei Inbetriebnahme und/oder Anbringung der Messvorrichtung am Messort die Energieversorgung automatisch aktiviert wird, ohne dass es eines weiteren Schrittes des Benutzers zur Inbetriebnahme bedarf. Auch kann aufgrund der Aktivierung der Energieversorgung über den Magnetschalter in vorteilhafter Weise das Gehäuse vollständig geschlossen ausgebildet werden, so dass die darin angeordneten Komponenten der Messvorrichtung umfassend und zuverlässig vor äußeren Einflüssen geschützt werden können.

Die Messvorrichtung kann beispielsweise eine hohe International Protection (IP)-Schutzart erreichen, etwa IP 68 und/oder 69. Zudem kann in vorteilhafter Weise eine Entladung der Batterie vor der Inbetriebnahme der Messvorrichtung verhindert werden, um die Lebensdauer der Batterie und/oder die Betriebsdauer der Messvorrichtung zu erhöhen sowie die Lagerbarkeit der Messvorrichtung zu verbessern.

Die Elektronik- und Sensoreinheit kann zur Erfassung verschiedener Messgrößen, wie beispielsweise Füllstand, Grenzstand und/oder einer beliebigen anderen Messgröße (etwa Temperatur und/oder Druck), ausgeführt sein. Erfindungsgemäß ist die Elektronik- und Sensoreinheit zur Erfassung des Füllstandes und/oder eines Grenzstandes eines Füllgutes, etwa mittels einer radarbasierten Füllstand- und/oder Grenzstandmessung, in einem Behälter ausgeführt.

Dazu kann die Elektronik-und Sensoreinheit eine Antenne aufweisen. Beispielsweise kann eine Parabolantenne, eine Hornantenne, eine Cassegrain-Antenne, eine Patchantenne und/oder eine Antennengruppe verwendet werden. Die Ansteuerung der Antennengruppe kann etwa adaptiv ausgeführt sein, um die Richtcharakteristik der Antennengruppe anpassen zu können, beispielsweise zum Erzielen einer starken Strahlbündelung.

Die Elektronik- und Sensoreinheit kann ferner eine Sende-Empfangsweiche (Duplexer) aufweisen, über die zwischen Sende- und Empfangsvorgängen umgeschaltet werden kann. Die Sende-Empfangsweiche kann insbesondere dazu eingerichtet sein, eine zeitliche Diskriminierung des Radarsignals, welches von der Elektronik- und Sensoreinheit abgestrahlt werden kann (auch Sendesignal genannt), und einen am Füllgut reflektierten Teil des Radarsignals (auch Empfangssignal genannt) zu ermöglichen.

Zur Erfassung einer Messgröße wie zum Beispiel des Füllstandes eines Füllgutes in einem Behälter kann die Elektronik- und Sensoreinheit sowohl analoge als auch digitale Signalverarbeitungsverfahren verwenden. Dementsprechend kann die Elektronik- und Sensoreinheit beispielsweise wenigstens einen Verstärker, Tiefpassfilter, Frequenzmischer und/oder Bandpassfilter für die analoge Signalverarbeitung aufweisen. Ferner kann die Elektronik- und Sensoreinheit einen Analog-Digital-Wandler zum Abtasten und Quantisieren analoger Signale aufweisen. Darüber hinaus kann die Elektronik- und Sensoreinheit einen oder mehrere Prozessoren für die digitale Signalverarbeitung aufweisen, zum Beispiel einen Mikroprozessor, digitalen Signalprozessor und/oder anderen Prozessore mit anwendungsspezifischen Befehlssätzen (application specific instruction set processors - ASIPs). Zudem kann die Elektronik- und Sensoreinheit wenigstens einen dedizierten Speicherbaustein für Daten und/oder Programmcode aufweisen, insbesondere einen flüchtigen oder nichtflüchtigen Speicher. Weiterhin kann die Elektronik- und Sensoreinheit einen oder mehrere anwendungsspezifische integrierte Schaltkreise (ASICs) aufweisen.

Die Messvorrichtung kann beispielsweise dazu ausgeführt sein, Messungen in Umgebungen auszuführen, in denen Staub, Flüssigkeiten oder Gase auftreten, die einen Betrieb der Elektronik- und Sensoreinheit beeinträchtigen können. Ferner kann es erforderlich sein, Messungen in Umgebungen auszuführen, in denen explosive Gase auftreten. Für den sicheren und zuverlässigen Betrieb der Messvorrichtung in solchen Umgebungen kann das Gehäuse der Messvorrichtung dazu ausgeführt sein, dass es die Elektronik- und Sensoreinheit, die Batterie und den Magnetschalter vollständig umschließt. Insbesondere kann das Gehäuse der Messvorrichtung derart ausgeführt sein, dass es nicht geöffnet werden kann, sodass etwa die Batterie zur Energieversorgung der Elektronik- und Sensoreinheit nicht auswechselbar ist. Insbesondere bei nicht auswechselbaren Batterien kann ein Entladen der Batterie vor der Inbetriebnahme der Messvorrichtung mittels des Magneten und dem Magnetschalter in vorteilhafter Weise verhindert werden.

Die Messvorrichtung kann mehrere Batterien zur Energieversorgung der Elektronik-und Sensoreinheit aufweisen. Die Batterien können beispielsweise in Reihe oder parallel geschaltet sein. Es ist auch möglich, dass unterschiedliche Batterien unterschiedliche Komponenten der Elektronik- und Sensoreinheit mit elektrischer Energie versorgen. Hier und im Folgenden umfasst der Begriff "Batterie" eine Primärzelle, eine Sekundärzelle sowie Zusammenschaltungen von Primär- und/oder Sekundärzellen. Daher sind mit dem Begriff "Batterie" sowohl aufladbare als auch nicht aufladbare Speicher für elektrische Energie, etwa auf elektrochemischer Basis, gemeint.

Die Klebeschicht der Messvorrichtung ist außen am Gehäuse der Messvorrichtung angeordnet und zur Anbringung der Messvorrichtung an einem gewünschten Messort ausgeführt. Erfindungsgemäß ist bei der Messvorrichtung zur Messung des Füllstands eines Füllgutes in einem Behälter die Klebeschicht für eine stoffschlüssige Anbringung der Messvorrichtung an einer Wandung des Behälters, in dem der Füllstand zu messen ist, ausgeführt.

Die Klebeschicht kann dabei eine Größe von zum Beispiel rund 6 × 6 cm² aufweisen. Es ist aber auch möglich, dass größere oder kleinere Klebeschichten verwendet werden. Die Klebeschicht kann eine beliebige Geometrie, etwa eine runde, ovale, elliptische, quadratische, polygonförmige und/oder rechteckige Geometrie, aufweisen.

Die Klebeschicht wird von einer Schutzfolie bedeckt, die mit dem Magnet verbunden ist, sodass ein Abziehen der Schutzfolie von der Klebeschicht ein Entfernen des Magneten von dem Gehäuse zur Folge hat. Beispielsweise kann der Magnet auf die Schutzfolie geklebt sein. Es ist aber zum Beispiel auch möglich, dass die Schutzfolie den Magnet ganz oder teilweise umhüllt. Bei dem Magnet handelt es sich vorzugsweise um einen Permanentmagnet. Dieser kann beispielsweise als metallische Legierung aus Eisen, Nickel und/oder Aluminium mit Zusätzen aus Cobalt, Mangan und Kupfer oder auch als keramischer Werkstoff ausgeführt sein. Mit dem Abziehen der Schutzfolie von der Klebeschicht wird gleichzeitig der Magnet von dem Gehäuse der Messvorrichtung und damit auch von dem Magnetschalter entfernt. Dadurch kann in vorteilhafter Weise die Klebeschicht zur Anbringung der Messvorrichtung am Messort freigelegt und gleichzeitig die Energieversorgung aktiviert werden.

Die Schutzfolie kann dabei zumindest teilweise über einen Rand der Klebeschicht herausragen. Dies ermöglicht einen umfassenden Schutz der Klebeschicht sowie ein leichtes Entfernen der Schutzfolie durch einen Benutzer.

Das Entfernen des Magneten von dem Gehäuse führt dazu, dass der Magnetschalter von einem ersten Schalterzustand in einen zweiten Schalterzustand schaltet. Ein Magnetschalter ist hier und im Folgenden ein Schalter, der über ein Magnetfeld geschaltet und/oder betätigt wird. Der Magnetschalter kann beispielsweise als Reed-Schalter ausgeführt sein. Insbesondere kann in dem ersten Schalterzustand ein elektrischer Kontakt geöffnet sein, während in dem zweiten Schalterzustand der elektrische Kontakt geschlossen ist. Die Messvorrichtung kann also dazu ausgeführt sein, dass in dem ersten Schalterzustand ein elektrischer Stromkreis unterbrochen ist, und/oder dass der elektrische Stromkreis in dem zweiten Schalterzustand geschlossen ist.

Die Messvorrichtung ist dazu ausgeführt, dass in dem ersten Schalterzustand des Magnetschalters die Batterie zumindest einen Teil der Elektronik- und Sensoreinheit nicht mit Energie versorgt. Das Schalten des Magnetschalters in den zweiten Schalterzustand führt dazu, dass der Teil der Elektronik- und Sensoreinheit mit Energie versorgt wird. Der in dem ersten Schalterzustand nicht mit Energie versorgte Teil der Elektronik- und Sensoreinheit kann etwa ein Teil der Elektronik- und Sensoreinheit sein, der viel Energie, etwa mehr als ein anderer Teil der Elektronik-und Sensoreinheit, verbraucht. Die Messvorrichtung kann auch dazu ausgeführt sein, dass die gesamte Elektronik- und Sensoreinheit in dem zweiten Schalterzustand von der Batterie mit Energie versorgt wird, und/oder dass in dem ersten Schalterzustand die Elektronik- und Sensoreinheit vollständig von der Batterie getrennt ist. Dadurch, dass die Batterie zumindest einen Teil der Elektronik- und Sensoreinheit in dem ersten Schalterzustand des Magnetschalters nicht mit Energie versorgt, kann der Stromverbrauch der Messvorrichtung vor der Inbetriebnahme reduziert und damit die Lebensdauer der Batterie verlängert werden.

Durch das Entfernen der Schutzfolie von der Klebeschicht kann also zum einen die Klebeschicht zur Anbringung der Messvorrichtung an dem gewünschten Messort freigelegt werden. Zum anderen wird der Batteriebetrieb aktiviert, d.h. das Entfernen der Schutzfolie von der Klebeschicht führt auch dazu, dass die Elektronik- und Sensoreinheit durch die Batterie mit Energie versorgt wird. Durch die Kopplung der durch das Entfernen der Schutzfolie erzielten Effekte wird die Inbetriebnahme der Messvorrichtung vereinfacht. Insbesondere bei schwer zugänglichen Messorten kommt darüber hinaus zum Tragen, dass die erfindungsgemäße Messvorrichtung nicht ohne eine Aktivierung des Batteriebetriebs am Messort angebracht werden kann. Es kann daher ausgeschlossen werden, dass die Batterie unbeabsichtigt nicht aktiviert wird.

Gemäß einer weiteren Ausführungsform umschließt das Gehäuse die Batterie, die Elektronik- und Sensoreinheit und den Magnetschalter vollständig. Insbesondere kann die Messvorrichtung keine Plastikfolie zur Isolierung der Batterie vor der Inbetriebnahme aufweisen. Damit kann das Gehäuse der Messvorrichtung auch keine Öffnung zum Entfernen der Plastikfolie aufweisen.

Das Gehäuse kann einen geschlossenen Innenraum bilden, in dem die Elektronik-und Sensoreinheit, die Batterie und der Magnetschalter angeordnet sind. Durch das vollständig umhüllende Gehäuse können die Elektronik- und Sensoreinheit, die Batterie und der Magnetschalter vor Staub, Gasen und Flüssigkeiten in der Umgebung der Messvorrichtung geschützt sein. Dadurch kann ein sicherer und zuverlässiger Betrieb der Messvorrichtung ermöglicht werden. Beispielsweise kann eine Füllstandmessvorrichtung mit einem vollständig umhüllenden Gehäuse innerhalb oder außerhalb des Behälters betrieben werden, in dem der Füllstand gemessen werden soll.

Dabei ist das Gehäuse der Messvorrichtung dazu ausgeführt, die Messung des zu erfassenden Messwertes durch das Gehäuse hindurch zu ermöglichen. Bei der Messvorrichtung, die als radarbasierte Füllstandmessvorrichtung ausgebildet ist, kann das Gehäuse beispielsweise aus einem Kunststoff gefertigt sein, der für das Radarsignal im Wesentlichen transparent sein kann. Alternativ dazu kann auch nur ein Abschnitt des Gehäuses für das von der Elektronik- und Sensoreinheit abgestrahlte Radarsignal transparent sein, und die Elektronik- und Sensoreinheit kann dazu ausgeführt sein, dass das Radarsignal durch den transparenten Abschnitt des Gehäuses propagiert.

Das Gehäuse kann insbesondere derart ausgebildet sein, dass ein von der Elektronik-und Sensoreinheit abgestrahltes Radarsignal durch das Gehäuse hindurch, insbesondere durch eine Gehäusewandung hindurch transmittierbar ist. Beispielsweise kann das Gehäuse aus einem Kunststoff, beispielsweise aus Polyethylen (PE) und/oder High Density Polyethylen (HDPE), gefertigt sein, der für das von der Elektronik- und Sensoreinheit abgestrahlte Radarsignal im Wesentlichen transparent ist. Es ist auch möglich, dass nur ein Abschnitt des Gehäuses für das von der Elektronik- und Sensoreinheit abgestrahlte Radarsignal transparent ist, und/oder die Elektronik- und Sensoreinheit kann dazu ausgeführt sein, dass das Radarsignal durch den transparenten Abschnitt des Gehäuses hindurch propagiert. Auch kann vorgesehen sein, in zumindest einem Teilbereich des Gehäuses, durch welchen das Abstrahlen und Empfangen des Radarsignals erfolgt, eine Dicke der Gehäusewandung derart zu wählen, dass das Radarsignal nicht oder nur geringfügig von dem Gehäuse absorbiert wird. Eine Dicke und/oder Wandstärke der Gehäusewandung kann etwa in einem Bereich von 1 mm bis 5 mm liegen, beispielsweise um eine ausreichende mechanische Stabilität zu gewährleisten. In dem Teilbereich kann die Dicke des Gehäuses geringer als in einem anderen Teilbereich des Gehäuses sein.

Gemäß einer Ausführungsform umschließt das Gehäuse die Batterie, die Elektronik-und Sensoreinheit und den Magnetschalter hermetisch, insbesondere staubdicht, wasserdicht und/oder luftdicht. Beispielsweise kann das Gehäuse der Messvorrichtung zum Erreichen der Schutzart IP 68 und/oder IP 69 ausgeführt und/oder ausgebildet sein, d.h. es ist staubdicht und bietet Schutz gegen Eindringen von Wasser auch bei dauerndem Untertauchen. Darüber hinaus kann das Gehäuse dazu ausgeführt sein, das Eindringen von Gasen in das Innere des Gehäuses zu verhindern. Dies kann beispielsweise in Anlagen der chemischen Industrie relevant sein, in denen explosive oder korrodierende Gase auftreten können.

Erfindungsgemäß ist die Elektronik- und Sensoreinheit zur Messung eines Füllstands in einem Behälter mittels Radar eingerichtet. Der gewünschte Messort ist eine Behälterwandung. Dabei kann die Elektronik- und Sensoreinheit eine Antenne aufweisen, von der ein Radarsignal in Richtung der Füllgutoberfläche abgestrahlt werden kann. Die Elektronik- und Sensoreinheit kann dazu ausgeführt sein, die Laufzeit zwischen dem Abstrahlen des Radarsignals (bzw. Sendesignals) und dem Empfangen des von der Füllgutoberfläche reflektierten Radarsignals (bzw. Empfangssignals) zu bestimmen. Etwa bei Kenntnis der Ausbreitungsgeschwindigkeit des Radarsignals in dem Medium zwischen Messvorrichtung und Füllgutoberfläche kann aus der Laufzeit des Radarsignals die Distanz zwischen Messvorrichtung und Füllgutoberfläche berechnet und/oder ermittelt werden.

In vielen Anwendungen kann diese Ausbreitungsgeschwindigkeit hinreichend genau mit der Lichtgeschwindigkeit approximiert werden. Die Füllguthöhe kann beispielsweise bestimmt werden, wenn die Höhe der Messvorrichtung über dem Behälterboden vorab bekannt ist. Da das Radarsignal mitunter nur teilweise von der Füllgutoberfläche reflektiert wird, während ein anderer Teil des Radarsignals durch das Füllgut propagiert, kann der Füllstand auch gemessen werden, indem die Zeitspanne zwischen dem Empfangen des von der Füllgutoberfläche reflektierten Teils des Radarsignals und dem Empfangen des von dem Behälterboden reflektierten Teils des Radarsignals bestimmt wird. Dabei ist die Geschwindigkeit des Radarsignals innerhalb des Füllgutes zu berücksichtigen.

Die Behälterwandung kann beispielsweise aus einem Kunststoff wie Polyethylen oder Polypropylen gefertigt sein. Die Messvorrichtung kann außerhalb des Behälters angeordnet sein, wobei das Radarsignal durch das Gehäuse der Messvorrichtung und die Behälterwandung propagiert. Es ist allerdings auch möglich, dass die Messvorrichtung innerhalb des Behälters angeordnet ist, in dem der Füllstand gemessen werden soll. Je nach vorgesehenem Messort kann die Klebeschicht daher entweder auf der Ober- oder Unterseite der Messvorrichtung angebracht sein, sowie entsprechend der Magnetschalter.

Gemäß einer weiteren Ausführungsform weist die Klebeschicht eine Aussparung für den Magneten auf und/oder der Magnet ist in einer Aussparung zwischen Gehäuse und Schutzfolie angeordnet. Durch die Aussparung in der Klebeschicht zur Aufnahme des Magneten kann zum einen vermieden werden, dass der Magnet an der Klebeschicht festklebt. Beispielsweise kann der Magnet als magnetisches Plättchen ausgeführt sein, das an einer Seite mit der Schutzfolie verbunden ist, ohne dass die Gefahr bestünde, dass die gegenüberliegende Seite des magnetischen Plättchens an der Klebeschicht festklebt. Zum anderen kann der Magnet aufgrund der Aussparung in der Klebeschicht näher an dem Gehäuse und dem darin angeordneten Magnetschalter angeordnet werden. Durch die Reduktion der Distanz zu dem Magnetschalter kann erreicht werden, dass der Magnet ein stärkeres Magnetfeld im Bereich des Magnetschalters erzeugt, sodass der Magnet den Magnetschalter zuverlässig in dem ersten Schalterzustand hält.

Gemäß einer weiteren Ausführungsform ist das Gehäuse dazu ausgestaltet, eine Messung durch das Gehäuse hindurch und/oder die Erfassung der Messgröße mittels der Elektronik- und Sensoreinheit durch das Gehäuse hindurch, insbesondere durch eine Gehäusewandung hindurch, zu ermöglichen. Dies kann insbesondere dann vorteilhaft sein, wenn das Gehäuse die Elektronik- und Sensoreinheit, die Batterie und den Magnetschalter vollständig umhüllt.

Gemäß einer weiteren Ausführungsform umfasst das Gehäuse mindestens zwei Gehäusebauteile, und die mindestens zwei Gehäusebauteile sind mittels Schweißen und/oder Kleben zusammengefügt. Beispielsweise kann das Gehäuse aus zwei Gehäusebauteilen bestehen, welche mittels eines geeigneten Klebers zusammengeklebt und/oder mittels Ultraschallschweißens zusammengefügt werden, sodass die Fügestelle aus dem aufgeschmolzenen Material der beiden Gehäusebauteile bestehen kann. Durch das Verschweißen und/oder Verkleben der Gehäusebauteile kann ein für Staub, Flüssigkeiten oder Gase undurchlässiges Gehäuse hergestellt werden, das die Elektronik- und Sensoreinheit, die Batterie und den Magnetschalter beispielsweise vor aggressiven Medien oder explosiven Gasen schützen kann.

Vorzugsweise sind die mindestens zwei Gehäusebauteile aus demselben Kunststoff (beispielsweise Polyethylen oder Polypropylen) gefertigt. Insbesondere kann das Gehäuse aus zwei identischen Gehäusehalbteilen gefertigt sein. Es ist aber auch möglich, dass unterschiedliche Gehäusebauteile aus unterschiedlichen Materialien hergestellt sind.

Gemäß einer weiteren Ausführungsform ist das Gehäuse des Radarsensors vollständig aus Kunststoff, insbesondere einem thermoplastischen Kunststoff, gefertigt. Dies ermöglicht eine kostengünstige Herstellung mittels Spritzguss.

Insbesondere ist es vorteilhaft, wenn das Gehäuse aus einem Kunststoff mit geringer relativer Permittivität (1,5-3) wie zum Beispiel Polyethylen oder Polypropylen gefertigt ist. Da die Messung des Radarsensors durch das Gehäuse hindurch erfolgt, reduziert dies das Klingeln der Antenne, verbessert die empfangene Signalqualität im Nahbereich und verringert somit die Blockdistanz des Sensors. Unter der Blockdistanz versteht man die Distanz innerhalb der keine bzw. keine verlässliche Messung/Auswertung der empfangenen Signale möglich ist.

Gemäß einer weiteren Ausführungsform ist das Gehäuse einstückig aus Kunststoff gespritzt. Ein einstückig aus Kunststoff gespritztes Gehäuse ist besonders vorteilhaft, da es keine Verbindungsstellen aufweist, an denen verschiedene Gehäusebauteile miteinander verbunden sind und an denen Undichtigkeiten auftreten können. Ein Umspritzen der Elektronik- und Sensoreinheit, der Batterie und des Magnetschalters zur Ausbildung eines einstückigen Gehäuses kann daher zu einer besonders sicheren und robusten Messvorrichtungen, beispielsweise für die radarbasierte Füllstandmessung, führen.

Gemäß einer weiteren Ausführungsform ist der Magnetschalter ein Reed-Schalter.

Der Reed-Schalter kann eine magnetische Schaltzunge aufweisen, die sich bei dem Entfernen des Magneten von dem Gehäuse und damit dem Magnetschalter bewegen kann, so dass der Schalter von dem ersten in den zweiten Schalterzustand und umgekehrt geschalten werden kann. Durch die Bewegung der magnetischen Schaltzunge kann ein elektrischer Kontakt geschlossen und/oder geöffnet werden. Mit anderen Worten kann der Reed-Schalter durch das Magnetfeld des mit der Schutzfolie verbundenen Magneten in einem geöffneten (bzw. ersten) und/oder einen geschlossenen (bzw. zweiten) Schalterzustand gehalten und/oder geschlaten werden. Der Schalterzustand kann sich ändern, wenn der Magnet von dem Magnetschalter durch das Abziehen der Schutzfolie von der Klebeschicht entfernt wird.

Ein Reed-Schalter kann auch zwei magnetische Schaltungen aufweisen, die sich bei dem Entfernen des Magneten von dem Gehäuse/Magnetschalter relativ zueinander bewegen. Ferner kann in dem Gehäuse der Messvorrichtung ein zweiter Magnet angeordnet sein, der den Reed-Schalter in dem zweiten Schalterzustand hält, solange kein Magnetfeld von außerhalb des Gehäuses einwirkt.

Gemäß einer weiteren Ausführungsform weist die Messvorrichtung eine in dem Gehäuse angeordnete Kommunikationseinheit auf, wobei die Kommunikationseinheit dazu eingerichtet ist, eine drahtlose Übertragung von Messdaten durch das Gehäuse zu ermöglichen. Dazu kann die Kommunikationseinheit insbesondere bekannte Technologien wie Bluetooth (z.B. Bluetooth Low Energy), ZigBee, Wi-Fi (z.B. Wi-Fi HaLow) und/oder zellulare Mobilfunkstandards wie 2G, 3G oder 4G (z.B. LTE Cat 0) verwenden. Die Kommunikationseinheit kann auch zur Bereitstellung einer optischen Kommunikationsverbindung eingerichtet sein. Die Kommunikationseinheit kann somit ein Bluetoothmodul, ein Funkmodul, ein WLAN-Modul, und/oder ein Infrarotmodul aufweisen.

Die Kommunikationseinheit kann dazu eingerichtet sein, Messwerte zu festen Zeiten, insbesondere periodisch, zu senden. Die Kommunikationseinheit kann auch dazu eingerichtet sein, Nachrichten und/oder Steuersignale von anderen Geräten zu empfangen und zu verarbeiten. Beispielsweise kann die Kommunikationseinheit dazu eingerichtet sein, eine Nachricht und/oder ein Steuersignal zu empfangen und zu verarbeiten, mit der ein anderes Gerät einen Messwert abfragt. Die Kommunikationseinheit kann dazu eingerichtet sein, die Elektronik- und Sensoreinheit als Antwort auf das Steuersignal zu triggern und/oder zu veranlassen, eine Messung auszuführen. Ferner kann die Kommunikationseinheit dazu eingerichtet sein, als Antwort auf die Messwertabfrage und/oder das Steuersignal des anderen Geräts den von der Elektronik- und Sensoreinheit in Reaktion auf den Trigger bestimmten Messwert zu senden.

Die Kommunikationseinheit kann ferner dazu eingerichtet sein, eine Nachricht und/oder ein Steuersignal eines anderen Geräts zu empfangen und zu verarbeiten, mit der das andere Gerät einen Messwert mitteilt. Die Kommunikationseinheit kann dazu eingerichtet sein, den von der Elektronik- und Sensoreinheit der Messvorrichtung bestimmten Messwert unter Verwendung des von dem anderen Gerät empfangenen Messwerts zu korrigieren, etwa um den korrigierten Messwert zu senden. Auch können mittels der Kommunikationseinheit Parametrierdaten zur Parametrierung der Messvorrichtung empfangen werden.

Anstelle von oder in Ergänzung zu der Kommunikationseinheit kann die Messvorrichtung eine Anzeigevorrichtung, insbesondere eine energieeffiziente Anzeigevorrichtung, aufweisen, beispielsweise eine Flüssigkeitskristallanzeige, über die der von der Elektronik- und Sensoreinheit bestimmte Messwert angezeigt wird.

Die vorliegende Erfindung betrifft ein Verfahren zur Inbetriebnahme einer Messvorrichtung, so wie voranstehend und nachfolgend beschrieben. Das Verfahren umfasst einen Schritt des Aktivierens der Energieversorgung der Elektronik- und Sensoreinheit durch die Batterie durch Abziehen der Schutzfolie von der Klebeschicht sowie einen Schritt des Anbringens der Messvorrichtung an den gewünschten Messort mittels der Klebeschicht. Dabei führt das Abziehen der Schutzfolie von der Klebeschicht zum einen dazu, dass die Klebeschicht zur Anbringung der Messvorrichtung an dem gewünschten Messort freigelegt werden kann und zum anderen dazu, dass die Elektronik- und Sensoreinheit durch die Batterie mit Energie versorgt wird. Durch die Kopplung der durch das Entfernen der Schutzfolie erzielten Effekte wird die Inbetriebnahme der Messvorrichtung vereinfacht. Außerdem kann vermieden werden, dass die Batterie unbeabsichtigt nicht aktiviert wird, wenn das Messgerät am Messort angebracht wird. Dies kann insbesondere dann relevant sein, wenn die Messung an einem schwer zugänglichen Messort durchzuführen ist.

Merkmale, Elemente und/oder Funktionen der Messvorrichtung, so wie voranstehend und nachfolgend beschreiben, können Merkmale, Elemente und/oder Schritte des Verfahrens zur Inbetriebnahme der Messvorrichtung, so wie voranstehend und nachfolgend beschrieben, sein und umgekehrt.

Gemäß einem Beispiel der vorliegenden Offenbarung kann die Messvorrichtung ein Gehäuse mit einer darin angeordneten Elektronik- und Sensoreinheit zur Erfassung einer Messgröße, eine Batterie zur Energieversorgung der Elektronik- und Sensoreinheit, einen Schalter, eine Klebeschicht und eine Schutzfolie zur Abdeckung der Klebeschicht aufweisen. Dabei kann die Klebeschicht außen am Gehäuse angeordnet und zur Anbringung der Messvorrichtung an einem gewünschten Messort ausgeführt sein. Die Messvorrichtung kann dazu ausgeführt sein, dass die Schutzfolie das Gehäuse unter Spannung hält, sodass ein Abziehen der Schutzfolie von der Klebeschicht eine mechanische Verformung des Gehäuses bewirken kann. Die Messvorrichtung kann ferner dazu ausgeführt sein, dass durch die mechanische Verformung des Gehäuses der Schalter von einem ersten Schalterzustand in einen zweiten Schalterzustand schaltet, wobei in dem ersten Schalterzustand zumindest ein Teil der Elektronik- und Sensoreinheit nicht von der Batterie mit Energie versorgt wird, und wobei der Teil der Elektronik- und Sensoreinheit in dem zweiten Schalterzustand von der Batterie mit Energie versorgt wird.

Gemäß einem weiteren Beispiel der vorliegenden Offenbarung kann die Messvorrichtung ein Gehäuse mit einer darin angeordneten Elektronik- und Sensoreinheit zur Erfassung einer Messgröße, eine Batterie zur Energieversorgung der Elektronik- und Sensoreinheit, eine Klebeschicht und eine Schutzfolie zur Abdeckung der Klebeschicht aufweisen. Dabei kann die Klebeschicht außen am Gehäuse angeordnet und zur Anbringung der Messvorrichtung an einem gewünschten Messort ausgeführt sein. Zumindest ein Teil der Elektronik- und Sensoreinheit kann von der Batterie nicht mit Energie versorgt werden. Die Messvorrichtung kann allerdings dazu ausgeführt sein, dass ein Abziehen der Schutzfolie von der Klebeschicht eine chemische Reaktion auslöst, insbesondere eine Reaktion mit Luftsauerstoff. Die Messvorrichtung kann ferner dazu ausgeführt sein, dass durch die chemische Reaktion ein elektrischer Kontakt geschlossen wird. Das Schließen des elektrischen Kontaktes kann dazu führen, dass der Teil der Elektronik-und Sensoreinheit von der Batterie mit Energie versorgt wird.

Gemäß einem weiteren Beispiel der vorliegenden Offenbarung kann die Messvorrichtung ein Gehäuse mit einer darin angeordneten Elektronik- und Sensoreinheit zur Erfassung einer Messgröße, eine Batterie zur Energieversorgung der Elektronik- und Sensoreinheit, einen elektronischen Schalter, eine Klebeschicht und eine Schutzfolie zur Abdeckung der Klebeschicht aufweisen. Bei dem elektronischen Schalter kann es sich insbesondere um einen Transistor handeln. Dabei kann die Klebeschicht außen am Gehäuse angeordnet und zur Anbringung der Messvorrichtung an einem gewünschten Messort ausgeführt sein. Die Schutzfolie kann derart elektrostatisch geladen sein, dass ein Abziehen der Schutzfolie von der Klebeschicht den elektronischen Schalter von einem ersten Schalterzustand in einen zweiten Schalterzustand schaltet, wobei in dem ersten Schalterzustand zumindest ein Teil der Elektronik- und Sensoreinheit nicht von der Batterie mit Energie versorgt wird und wobei der Teil der Elektronik- und Sensoreinheit in dem zweiten Schalterzustand von der Batterie mit Energie versorgt wird.

Im Folgenden werden Ausführungsbeispiele der Erfindung unter Bezugnahme auf die Figuren beschrieben.

### Kurze Beschreibung der Figuren

Fig. 1 zeigt schematisch eine erfindungsgemäße Messvorrichtung.
Fig. 2 zeigt die an einen Messort angebrachte Messvorrichtung gemäß Figur 1.
Fig. 3 zeigt ein Flussdiagramm zur Illustration von Schritten eines Verfahrens zur Inbetriebnahme der Messvorrichtung gemäß einem Ausführungsbeispiel der Erfindung.

Ähnliche, ähnlich wirkende, gleiche oder gleich wirkende Elemente in den Figuren werden mit ähnlichen oder gleichen Bezugszeichen versehen. Die Figuren sind lediglich schematische und nicht maßstabsgetreu.

### Detaillierte Beschreibung von Ausführungsbeispielen

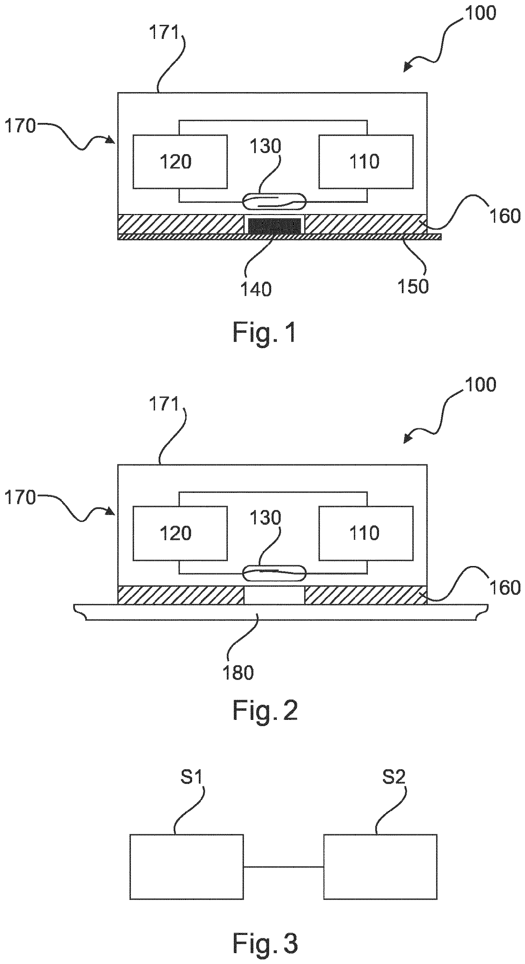

Figur 1 zeigt schematisch eine Messvorrichtung 100 gemäß der Erfindung. Die Messvorrichtung 100 weist eine Elektronik- und Sensoreinheit 120, eine Batterie 110 zur Versorgung der Elektronik- und Sensoreinheit mit Energie und einen Magnetschalter 130 auf. Ferner weist die Messvorrichtung ein Gehäuse 170 mit einer Gehäusewandung 171 auf, welches die Elektronik- und Sensoreinheit, die Batterie und den Magnetschalter vollständig umhüllt, sodass Staub, Feuchtigkeit und/oder Luft und/oder explosives Gas nicht in den von dem Gehäuse umschlossenen Innenraum dringen können. Die Batterie kann aufgrund des geschlossenen Gehäuses nicht auswechselbar sein. Der Magnetschalter kann als Reed-Schalter ausgeführt sein. Durch den Reed-Schalter ist zumindest ein Teil der Elektronik- und Sensoreinheit von der Energieversorgung durch die Batterie getrennt, solange der Magnet 140 den Magnetschalter 130 offen und/oder in einem ersten Schalterzustand hält. Außen am Gehäuse 170 der Messvorrichtung 100 befindet sich eine Klebeschicht 160 zur Anbringung der Messvorrichtung an einem gewünschten Messort. Die Klebeschicht wird durch eine Schutzfolie 150 bedeckt. Mit der Schutzfolie ist ein Magnet 140 verbunden. Wird zur Anbringung der Messvorrichtung die Schutzfolie 150 von der Klebeschicht 160 abgezogen, wird gleichzeitig der Magnet 140 von dem Magnetschalter 130 entfernt. Hierdurch schließt der Magnetschalter bzw. schaltet in den zweiten Schalterzustand, sodass die Elektronik- und Sensoreinheit von der Batterie mit Energie versorgt wird und das Gerät seinen Betrieb aufnimmt.

Figur 2 zeigt schematisch die Messvorrichtung 100 gemäß Figur 1, nachdem die Schutzfolie mit dem Magnet von der Klebeschicht 160 entfernt und die Messvorrichtung an dem gewünschten Messort 180 angebracht wurde. Der gewünschte Messort 180 ist eine Behälterwandung. Die Klebeschicht 160 sorgt hierbei für eine stoffschlüssige Verbindung zwischen dem Messort 180 und dem Gehäuse 170 der Messvorrichtung. Während der Batterielebensdauer kann die Messvorrichtung durch das Gehäuse 170 und die Behälterwandung 180 hindurch zum einen Messdaten des Behälterinhaltes und zum anderen Messdaten von der Umgebung aufnehmen. Die Behälterwandung ist hierbei vorzugsweise aus Kunststoff (Polyethylen, Polyethylen) ausgeführt. Bei den Messdaten handelt es sich um mit einem Füllstand und/oder einer Füllhöhe eines Mediums in einem Behälter korrelierende Messdaten. Diese werden mittels radarbasierter Verfahren gemessen. Es sind aber auch andere Messdaten wie zum Beispiel die Temperatur, etwa die Umgebungstemperatur, und/oder Druck, etwa der Luftdruck, denkbar.

Figur 2 veranschaulicht ferner, dass das Entfernen des Magneten von dem Magnetschalter 130 dazu führt, dass der Magnetschalter schließt bzw. in den zweiten Schalterzustand überführt wird, sodass die Batterie 110 die Elektronik- und Sensoreinheit 120 mit Energie versorgt.

Figur 3 zeigt ein Flussdiagramm zur Illustration von Schritten eines Verfahrens zur Inbetriebnahme der Messvorrichtung 100 gemäß einem Ausführungsbeispiel der Erfindung. Sofern nicht anders beschrieben, kann die Messvorrichtung 100 der Figur 3 dieselben Merkmale und Elemente wie die Messvorrichtung 100 der Figuren 1 und 2 aufweisen.

In einem ersten Schritt S1 wird eine Energieversorgung der Elektronik- und Sensoreinheit 120 durch die Batterie 110 durch Abziehen der Schutzfolie 150 von der Klebeschicht 160 aktiviert. In einem weiteren Schritt S2 wird die Messvorrichtung 100 an dem gewünschten Messort 180 mittels der Klebeschicht 160 angebracht und/oder befestigt.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Messvorrichtung (100) zur Messung eines Füllstands und/oder Grenzstandes in einem Behälter mittels Radar, aufweisend:
ein Gehäuse (170) mit einer darin angeordneten Elektronik- und Sensoreinheit (120) zur Erfassung einer Messgröße, eine Batterie (110) zur Energieversorgung der Elektronik- und Sensoreinheit, einen Magnetschalter (130), einen Magnet (140) zur Betätigung des Magnetschalters, eine Klebeschicht (160) und eine Schutzfolie (150) zur Abdeckung der Klebeschicht;
wobei die Klebeschicht außen am Gehäuse angeordnet und zur Anbringung der Messvorrichtung an einem gewünschten Messort (180) ausgeführt ist;
wobei die Schutzfolie derart mit dem Magneten verbunden ist, dass ein Abziehen der Schutzfolie von der Klebeschicht ein Entfernen des Magneten von dem Gehäuse zur Folge hat;
wobei die Messvorrichtung dazu ausgeführt ist, dass das Entfernen des Magneten von dem Gehäuse den Magnetschalter von einem ersten Schalterzustand in einen zweiten Schalterzustand schaltet;
wobei in dem ersten Schalterzustand zumindest ein Teil der Elektronik- und Sensoreinheit nicht von der Batterie mit Energie versorgt wird;
wobei der Teil der Elektronik- und Sensoreinheit in dem zweiten Schalterzustand von der Batterie mit Energie versorgt wird.

2. Messvorrichtung (100) nach Anspruch 1,
wobei das Gehäuse (170) die Batterie (110), die Elektronik- und Sensoreinheit (120) und den Magnetschalter (130) vollständig umschließt.

3. Messvorrichtung (100) nach einem der Ansprüche 1 oder 2,
wobei das Gehäuse (170) die Batterie (110), die Elektronik- und Sensoreinheit (120) und den Magnetschalter (130) hermetisch, insbesondere staubdicht, wasserdicht und/oder luftdicht, umschließt.

4. Messvorrichtung (100) nach einem der vorhergehenden Ansprüche,
wobei der gewünschte Messort (180) eine Behälterwandung ist.

5. Messvorrichtung (100) nach einem der vorhergehenden Ansprüche,
wobei die Klebeschicht (160) eine Aussparung für den Magneten (140) aufweist; und/oder
wobei der Magnet in einer Aussparung zwischen Gehäuse (170) und Schutzfolie (150) angeordnet ist.

6. Messvorrichtung (100) nach einem der vorhergehenden Ansprüche,
wobei das Gehäuse (170) dazu ausgestaltet ist, die Erfassung der Messgröße mittels der Elektronik- und Sensoreinheit (120) durch das Gehäuse hindurch, insbesondere durch eine Gehäusewandung des Gehäuses hindurch, zu ermöglichen.

7. Messvorrichtung (100) nach einem der vorhergehenden Ansprüche,
wobei das Gehäuse (170) mindestens zwei Gehäusebauteile umfasst; und
wobei die mindestens zwei Gehäusebauteile mittels Schweißen und/oder Kleben zusammengefügt sind.

8. Messvorrichtung (100) nach einem der Ansprüche 1 bis 6,
wobei das Gehäuse (170) einstückig aus Kunststoff gespritzt ist.

9. Messvorrichtung (100) nach einem der voranstehenden Ansprüche,
wobei das Gehäuse (170) vollständig aus einem Kunststoff, insbesondere einem thermoplastischen Kunststoff, gefertigt ist.

10. Messvorrichtung (100) nach einem der vorhergehenden Ansprüche,
wobei der Magnetschalter (130) ein Reed-Schalter ist.

11. Messvorrichtung (100) nach einem der vorhergehenden Ansprüche, ferner aufweisend:
eine in dem Gehäuse angeordnete Kommunikationseinheit,
wobei die Kommunikationseinheit dazu eingerichtet ist, eine drahtlose Übertragung von Messdaten durch das Gehäuse (170) zu ermöglichen.

12. Verfahren zur Inbetriebnahme einer Messvorrichtung (100) nach Anspruch 1, aufweisend die Schritte:
Aktivieren einer Energieversorgung der Elektronik- und Sensoreinheit (120) durch die Batterie (110) durch Abziehen der Schutzfolie (150) von der Klebeschicht (160); und
Anbringen der Messvorrichtung an den gewünschten Messort (180) mittels der Klebeschicht.

## Claims

1. A measuring device (100) for determining a filling level and/or a limit level in a container by means of radar, comprising:
a housing (170) with an electronic sensor circuitry (120) arranged therein for detecting a measurement variable, a battery (110) for supplying power to the electronic sensor circuitry, a magnetic switch (130), a magnet (140) for actuating the magnetic switch, an adhesive layer (160), and a protective film (150) for covering the adhesive layer;
wherein the adhesive layer is arranged on the outside of the housing and is configured for attaching the measuring device to a desired measurement location (180);
wherein the protective film is bonded to the magnet such that peeling the protective film from the adhesive layer results in removal of the magnet from the housing;
wherein the measuring device is configured such that removal of the magnet from the housing switches the magnetic switch from a first switch state to a second switch state;
wherein, in the first switch state, at least a portion of the electronic sensor circuitry is not powered by the battery; and
wherein the at least portion of the electronic sensor circuitry in the second switch state is powered by the battery.

2. The measuring device (100) according to claim 1,
wherein the housing (170) completely encloses the battery (110), the electronic sensor circuitry (120), and the magnetic switch (130).

3. The measuring device (100) according to one of claims 1 or 2,
wherein the housing (170) hermetically encloses the battery (110), the electronic sensor circuitry (120) and the magnetic switch (130), in particular in a dust-tight, water-tight and/or air-tight manner.

4. The measuring device (100) according to any one of the preceding claims,
wherein the desired measurement location (180) is a container wall.

5. The measuring device (100) according to any one of the preceding claims,
wherein the adhesive layer (160) includes a recess for the magnet (140); and/or
wherein the magnet is arranged in a recess between the housing (170) and the protective film (150).

6. The measuring device (100) according to any one of the preceding claims,
wherein the housing (170) is configured to enable detection of the measurement variable by means of the electronic sensor circuitry (120) through the housing, in particular through a housing wall of the housing.

7. The measuring device (100) according to any one of the preceding claims,
wherein the housing (170) comprises at least two housing components; and
wherein the at least two housing components are joined by welding and/or bonding.

8. The measuring device (100) according to any one of claims 1 to 6,
wherein the housing (170) is injection molded in one piece from plastic material.

9. The measuring device (100) according to any of the preceding claims,
wherein the housing (170) is manufactured entirely from a plastic material, in particular a thermoplastic plastic material.

10. The measuring device (100) according to any one of the preceding claims,
wherein the magnetic switch (130) is a Reed switch.

11. The measuring device (100) according to any one of the preceding claims, further comprising:
a communication circuitry located in the housing,
wherein the communication circuitry is configured to enable wireless transmission of measurement data through the housing (170).

12. A method of commissioning a measuring device (100) according to claim 1, comprising the steps of:
activating a power supply of the electronic sensor circuitry (120) by the battery (110) by peeling off the protective film (150) from the adhesive layer (160); and
attaching the measuring device to the desired measurement location (180) by means of the adhesive layer.

## Revendications

1. Dispositif de mesure (100) destiné à mesurer un niveau de remplissage et/ou un niveau d'interface dans un récipient par radar, pourvu :
d'un boîtier (170) dans lequel est disposée une unité d'électronique et de capteur (120) destinée à acquérir une grandeur de mesure, d'une batterie (110) destinée à alimenter en énergie ladite unité d'électronique et de capteur, d'un interrupteur magnétique (130), d'un aimant (140) destiné à actionner ledit interrupteur magnétique, d'une couche adhésive (160) et d'une feuille de protection (150) destinée à recouvrir ladite couche adhésive ;
ladite couche adhésive étant disposée à l'extérieur sur ledit boîtier et réalisée de manière à ce qu'elle permette de monter ledit dispositif de mesure à un lieu de mesure (180) souhaité ;
ladite feuille de protection étant reliée audit aimant de manière à ce qu'un retrait de la feuille de protection de la couche adhésive ait pour conséquence que l'aiment soit retiré dudit boîtier ;
ledit dispositif de mesure étant réalisé de manière à ce que le retrait dudit aimant dudit boîtier fait en sorte que ledit interrupteur magnétique passe d'un premier état d'interrupteur à un deuxième état d'interrupteur ;
au moins une partie de l'unité d'électronique et de capteur n'étant, dans ledit premier état d'interrupteur, pas alimentée en énergie par ladite batterie ;
cette partie de l'unité d'électronique et de capteur étant,
dans ledit deuxième état d'interrupteur, alimentée en énergie par ladite batterie.

2. Dispositif de mesure (100) selon la revendication 1,
le boîtier (170) renfermant l'intégralité de la batterie (110), de l'unité d'électronique et de capteur (120) et de l'interrupteur magnétique (130).

3. Dispositif de mesure (100) selon l'une des revendications 1 ou 2,
le boîtier (170) renfermant hermétiquement, notamment de manière étanche à la poussière, étanche à l'eau et/ou étanche à l'air, la batterie (110), l'unité d'électronique et de capteur (120) et l'interrupteur magnétique (130).

4. Dispositif de mesure (100) selon l'une des revendications précédentes,
le lieu de mesure (180) souhaité étant une paroi de récipient.

5. Dispositif de mesure (100) selon l'une des revendication précédentes,
la couche adhésive (160) comportant un évidement destiné à l'aimant (140) ; et/ou
ledit aimant étant disposé dans un évidement entre le boîtier (170) et la feuille de protection (150).

6. Dispositif de mesure (100) selon l'une des revendication précédentes,
le boîtier (170) étant réalisé de manière à ce qu'il permette d'acquérir la grandeur de mesure, au moyen de l'unité d'électronique et de capteur (120), à travers ledit boîtier, notamment à travers une paroi de boîtier dudit boîtier.

7. Dispositif de mesure (100) selon l'une des revendication précédentes,
le boîtier (170) comprenant au moins deux composants de boîtier ; et lesdits au moins deux composants de boîtier étant assemblés par soudage et/ou collage.

8. Dispositif de mesure (100) selon l'une des revendications 1 à 6,
le boîtier (170) étant réalisé d'une seule pièce par injection de matière plastique.

9. Dispositif de mesure (100) selon l'une des revendications précédentes,
l'intégralité du boîtier (170) étant fabriquée en une matière plastique, s'agissant notamment d'une matière thermoplastique.

10. Dispositif de mesure (100) selon l'une des revendication précédentes,
l'interrupteur magnétique (130) étant un interrupteur reed.

11. Dispositif de mesure (100) selon l'une des revendication précédentes, comportant en outre :
une unité de communication disposée dans ledit boîtier, ladite unité de communication étant conçue pour permettre une transmission sans fil de données de mesure à travers le boîtier (170).

12. Procédé de mise en œuvre du dispositif de mesure (100) selon la revendication 1, comportant les étapes consistant à :
activer une alimentation en énergie de l'unité d'électronique et de capteur (120) par la batterie (110), en retirant la feuille de protection (150) de la couche adhésive (160) ; et
monter ledit dispositif de mesure sur le lieu de mesure (180) souhaité, au moyen de ladite couche adhésive.
